# DEMANDE DE BREVET EUROPEEN

(11) **EP 4 458 146 A1**
(43) Date de publication de la demande: **06.11.2024**
(21) Numéro de dépôt: 23171422.1
(22) Date de dépôt: 03.05.2023
(51) Int. Cl.: A01L 1/00, A01L 7/00, A01L 7/02

(54) **PLAQUE ET KIT ORTHOPÉDIQUES POUR FERRURE ÉQUESTRE**

(71) Demandeur: Planchon, Valentin, 59258 Crevecoeur sur L'Escaut (FR)
(72) Inventeur: Planchon, Valentin, 59258 Crevecoeur sur L'Escaut (FR)
(74) Mandataire: RVDB

(57) **Abrégé**

La présente invention concerne une plaque orthopédique (200a) pour ferrure équestre, ladite plaque (200a) présentant une épaisseur et une forme dimensionnées pour modifier le profil d'un fer à cheval (100) lorsque ladite plaque orthopédique (200a) est assemblée avec ledit fer à cheval (100), ladite plaque orthopédique (200a) comportant des moyens de fixation amovible (210) sur ledit fer à cheval (100), ladite plaque orthopédique (200a) restant amovible lorsque ledit fer à cheval (100) est assemblé sur un sabot d'un cheval.

## Description

### Domaine technique

La présente invention concerne le domaine de la maréchalerie.

La présente invention concerne plus particulièrement une plaque orthopédique pour ferrure équestre destinée à être montée sur un fer à cheval, et un kit orthopédique incorporant au moins une telle plaque et un fer à cheval.

Par plaque orthopédique au sens de la présente, on entend dans toute la description qui suit une plaque dédiée à la prévention et la correction de déformations ou d'affections relatives au pied du cheval, ceci *via* une adaptation de la forme du fer à cheval auquel la plaque orthopédique est associée. Une telle adaptation peut viser à renforcer une section spécifique du fer à cheval, à en faire varier le profil ou l'épaisseur et/ou à modifier la pose du sabot ferré, son équilibre et les tendons sollicités.

La présente invention trouvera ainsi de nombreuses applications avantageuses dans le domaine de la maréchalerie, notamment pour la fourniture de ferrures adaptées à la rééducation.

### Art antérieur

Le Demandeur observe que l'emploi de ferrures orthopédiques permet de traiter une pluralité d'affections du pied du cheval. De telles ferrures permettent de protéger les zones fragilisées du pied, notamment lors d'efforts physiques, permettant au pied de récupérer ou encore de rééduquer la pose du pied de manière à équilibrer les muscles et tendons sollicités.

Ces ferrures peuvent également être employées de manière préventive plutôt que curative, par exemple en répartissant le poids du cheval sur une surface plus élevée et améliorant son amortissement naturel.

A ce titre, le document FR 2948852 A1 divulgue une plaque d'amortissement pour ferrure équestre, destinée à être insérée et fixée entre le sabot d'un cheval et un fer à cheval, laquelle améliore l'amortissement naturel du pied du cheval, son adhérence au sol, la pose du pied, et permet également de prévenir l'apparition de tendinopathies. Une telle plaque est posée contre la sole du pied du cheval, le fer à cheval étant par la suite cloué à-travers la plaque et le sabot, l'ensemble étant par la suite solidarisé par injection de silicone ou de résine. Cette solution nécessite ainsi la réalisation d'opérations particulières de la part du maréchal ferrant et solidarise l'ensemble formé par la plaque d'amortissement et le fer à cheval au sabot du cheval, gênant le retrait ultérieur de la ferrure orthopédique.

Le Demandeur observe en outre que le port de telles ferrures à long ou moyen terme cause l'apparition de pathologies supplémentaires. En effet, la modification du profil du fer à cheval mène à réduire la sollicitation de certains tendons tout en augmentant la charge appliquée sur les tendons opposés, et l'équilibrage entre ces sollicitations est complexe à atteindre, surtout pour le traitement d'une pathologie en évolution.

La réalisation de ferrures orthopédiques est également souvent coûteuse car nécessitant soit l'adaptation de la forme du fer à cheval, c'est-à-dire un travail lourd de forgeage de la part du maréchal ferrant, soit la fourniture d'un fer orthopédique dédié, compatible avec le travail du maréchal ferrant et adapté au traitement ou à la prévention de la pathologie voulue. De tels traitements restent ainsi souvent réservés à la ferrure de chevaux de sport.

Le Demandeur soumet par conséquent qu'il n'existe à ce jour aucune solution alternative satisfaisante permettant la fourniture de ferrures équestres orthopédiques simples de réalisation et d'emploi, lesquelles ne déséquilibrent pas les efforts sur le long terme.

### Résumé de l'invention

La présente invention vise à améliorer la situation actuelle décrite ci-dessus.

La présente invention vise plus particulièrement à remédier aux limitations ci-dessus en proposant une ferrure orthopédique permettant de libérer périodiquement le pied du cheval. A cet effet, l'objet de la présente invention concerne dans un premier aspect une plaque orthopédique pour ferrure équestre, destinée à être assemblée avec un fer à cheval, ladite plaque présentant une épaisseur et une forme dimensionnées pour modifier le profil du fer à cheval lorsque la plaque est assemblée avec le fer à cheval.

En d'autres termes, la plaque orthopédique est telle que l'assemblage de la plaque orthopédique avec le fer à cheval permet la réalisation d'une ferrure orthopédique, c'est à dire une ferrure dont le contour épouse celui du sabot d'un cheval et présentant un profil modifié par rapport à un fer à cheval classique. Ce profil modifié produit l'effet orthopédique recherché pour le traitement ou la prévention d'une pathologie du pied du cheval. Avantageusement, la plaque orthopédique comporte des moyens de fixation amovible de la plaque orthopédique sur le fer à cheval, la plaque orthopédique restant amovible lorsque le fer à cheval est assemblé sur un sabot d'un cheval.

On comprend ici que les moyens de fixation sont configurés pour permettre d'assembler et/ou de retirer la plaque orthopédique vis-à-vis du fer à cheval, même lorsque celui-ci est assemblé sur le sabot du cheval, par exemple cloué sur le sabot. Cette conception permet ainsi de fixer la plaque orthopédique sur le fer à cheval pour une courte période, par exemple durant un effort prononcé ou un travail de rééducation, et/ou de libérer périodiquement le fer à cheval de la plaque orthopédique, par exemple de manière à permettre au pied et aux tendons et muscles de récupérer, et/ou d'échanger la plaque orthopédique avec une autre sur le même fer à cheval, par exemple afin d'adapter progressivement la ferrure orthopédique à l'évolution du pied du cheval.

L'homme du métier comprend en outre que l'assemblage et le retrait de la plaque orthopédique sur le fer à cheval correspond à une opération plus simple que le changement d'une ferrure complète, laquelle peut ainsi être effectuée sans requérir l'intervention d'un maréchal ferrant. Les coûts associés sont ainsi réduits et l'utilisation de ferrures orthopédiques est rendue plus accessible, notamment hors du domaine de l'équitation de compétition. Grâce à la présente invention, la fourniture de ferrures orthopédiques est simplifiée et améliorée par une adaptation d'une plaque orthopédique amovible sur une ferrure classique. Il n'est alors plus nécessaire de réaliser de ferrure orthopédique dédiée et une ferrure classique peut être convertie en ferrure orthopédique de manière temporaire par la provision d'une plaque orthopédique appropriée. Les risques de déséquilibrage des sollicitations et des efforts causés par la ferrure orthopédique sont également réduits.

Dans un mode de réalisation avantageux de l'invention, les moyens de fixation amovible correspondent à des vis dimensionnées pour leur insertion dans des mortaises pratiquées sur le fer à cheval.

Par mortaise au sens de la présente invention, on entend ici et dans toute la description qui suit un trou fileté ménagé dans le fer à cheval. On comprend ici que, selon le positionnement et la forme de la plaque orthopédique, les mortaises correspondent par exemple aux mortaises couramment pratiquées sur les portions d'éponge, c'est-à-dire les extrémités, du fer à cheval, ou encore à des mortaises spécifiquement réalisées pour la fixation amovible de la plaque orthopédique. On conçoit ainsi selon un premier exemple une plaque orthopédique apte à être fixée sur n'importe quel fer à cheval, et selon un deuxième exemple une plaque orthopédique configurée pour être fixée de manière amovible sur un fer à cheval présentant des mortaises spécifiquement positionnées pour la réception de la plaque orthopédique.

L'homme du métier comprend que le ménagement d'une ou de plusieurs mortaises supplémentaires, par exemple par perçage et taraudage, représente une tâche connue et simple pour le maréchal ferrant, laquelle ne nécessite d'être effectuée qu'une fois par fer à cheval, la plaque orthopédique pouvant par la suite être librement fixée et retirée par vissage dans les mortaises, nécessitant uniquement un nettoyage préalable de la mortaise, par exemple à l'aide d'un taraud.

De préférence, au moins une des vis présente une tête de vis configurée pour s'étendre de la plaque lorsque la plaque est fixée sur le fer à cheval, la tête de vis s'étendant selon une direction orthogonale au fer à cheval.

L'homme du métier comprend ici que la tête de vis remplit alors une fonction de crampon similaire aux crampons usuellement assemblés sur les mortaises d'un fer à cheval classique. De tels crampons permettent d'améliorer la pose du pied et d'éviter les glissades sur un terrain en herbe ou plus généralement sur sol mou. On prévoit par exemple que seules les vis destinées à une insertion dans des mortaises disposées en portion d'éponge du fer à cheval présentent une tête de vis s'étendant de la plaque orthopédique, de manière à effectivement reproduire le comportement d'un crampon standard sans altérer la pose du pied du cheval. Selon une variante, on prévoit un premier ensemble de vis présentant des têtes de vis reproduisant une forme de crampon et adaptées à l'utilisation de la plaque orthopédique sur sol mou ou souple, et un deuxième ensemble de vis présentant des têtes de vis planes, par exemple des vis à tête fraisée, adaptées à l'utilisation de la plaque orthopédique sur sol dur. On prévoit également une autre variante dans laquelle les têtes de vis présentent une pluralité de formes permettant une sélection plus large, par exemple une tête de vis plus longue et large pour une utilisation sur un terrain lourd et glissant, notamment un terrain humide.

On comprend additionnellement que la fixation de la plaque orthopédique sur le fer à cheval est aussi simple d'utilisation que le vissage de crampons sur une ferrure classique, par exemple à l'aide d'une clé adéquate, sans requérir l'intervention d'un spécialiste.

Dans un mode de réalisation particulier, la plaque orthopédique présente une forme sensiblement trapézoïdale isocèle comprenant deux extrémités longitudinales, les extrémités longitudinales définissant un contour correspondant au contour de deux portions d'éponge du fer à cheval, la plaque étant destinée à être fixée sur les portions d'éponge du fer à cheval par les extrémités longitudinales de manière à s'étendre entre les deux portions d'éponge.

En d'autres termes, la plaque orthopédique vient j oindre les deux portions d'éponge l'une avec l'autre en s'étendant sensiblement latéralement entre celles-ci, par exemple de manière à les renforcer et éviter qu'elles s'écartent ou se resserrent. Elle permet optionnellement d'orienter le pied vers l'avant en augmentant l'épaisseur de la portion arrière du sabot ferré. La plaque orthopédique recouvre et protège également le talon et une portion de la sole du sabot ferré.

L'homme du métier comprend ici qu'une telle plaque orthopédique permet de rééquilibrer la boîte cornée du sabot et est adaptée aux problèmes de distorsion de la couronne et de la hauteur de la paroi du sabot, lorsque le pied présente un talon chevauché ou encastelé, c'est-à-dire lorsque le sabot se rétrécit par resserrement des quartiers ou des talons, ou encore par atrophie de la fourchette, ou lorsque le pied présente une ou plusieurs seimes, c'est-à-dire des fissures verticales résultant d'une lésion. En d'autres termes, la plaque orthopédique permet ainsi d'éviter que le pied ne se resserre ou d'aggraver une fissure. La protection du talon et de la sole est également avantageuse en cas de bleime, c'est-à-dire de contusion de la sole, ou encore d'ossification des processus palmaires. L'orientation du pied vers l'avant permet en outre de soulager le tendon fléchisseur profond du doigt (aussi appelé tendon « FPD ») en cas de tendinite liée à gaine des fléchisseurs ou à la bride carpienne.

Dans un autre mode de réalisation, la plaque orthopédique présente une forme en arc de cercle comprenant deux extrémités angulaires, les extrémités angulaires définissant un contour correspondant au contour de deux portions d'éponge du fer à cheval, la plaque étant destinée à être fixée sur les portions d'éponge du fer à cheval par les extrémités angulaires, de manière à s'étendre de manière excentrée par rapport au fer à cheval.

Par extrémité angulaires au sens de la présente, on entend ici et dans toute la description qui suit les sections situées aux bords de l'arc de cercle, c'est-à-dire les zones comportant les points limites de l'arc de cercle.

En d'autres termes, la plaque orthopédique assemblée sur le fer à cheval permet de réaliser une ferrure présentant une forme sensiblement elliptique, la plaque orthopédique venant refermer l'ellipse formée par le fer à cheval. La plaque orthopédique s'étend ainsi vers l'arrière du sabot ferré et le soulève vers l'avant.

L'homme du métier comprend ici qu'une telle conception permet de réaliser une ferrure orthopédique limitant les tensions du tendon fléchisseur profond, notamment en cas de syndrome naviculaire ou de tendinite distale, et facilitant le départ du pied par rapport au sol, aussi appelé « breakover ».

Dans un mode de réalisation additionnel, la plaque orthopédique présente une forme en arc de cercle plein définissant un contour externe correspondant au contour d'une portion de pince et de deux portions de mamelle du fer à cheval, la plaque étant destinée à être fixée sur les portions de mamelle du fer à cheval de manière à faire correspondre le contour externe aux portions de pince et de mamelle.

En d'autres termes, la plaque orthopédique est assemblée sur une portion avant du sabot ferré et le soulève vers l'arrière, ce soulèvement étant renforcé par la forme pleine de la plaque orthopédique, c'est-à-dire s'étendant vers l'intérieur du fer à cheval par rapport à son contour. La largeur et l'épaisseur de la plaque orthopédique peuvent également être adaptées de manière à altérer ce soulèvement.

L'homme du métier comprend ici que cette plaque orthopédique permet de limiter la pénétration de la pince du fer à cheval en sol souple et que le soulèvement vers l'arrière du sabot ferré soulage l'appareil suspenseur et l'appareil fléchisseur superficiel tout en sollicitant le fléchisseur profond. Les tensions sont ainsi réduites au niveau du suspenseur, des branches et de la bride radiale du pied du cheval équipé de la ferrure orthopédique. Articulairement, le boulet est également soulagé, par exemple dans les cas d'arthropathie dégénérative et/ou de kyste osseux.

Dans un mode de réalisation spécifique, la plaque orthopédique présente une forme définissant un contour correspondant au contour de portions adjacentes d'éponge, de quartier et de mamelle du fer à cheval, selon une moitié latérale du fer à cheval, la plaque étant destinée à être fixée sur la portion d'éponge et la portion de mamelle du fer à cheval en recouvrant les portions adjacentes d'éponge, de quartier et de mamelle sur la moitié latérale et s'étendant vers un centre géométrique du fer à cheval.

En d'autres termes, la plaque orthopédique vient recouvrir une moitié latérale du fer à cheval, partant d'une portion d'éponge vers une portion de mamelle, selon le contour du fer à cheval, et s'étend vers l'intérieur du fer à cheval à partir de ces portions. Le sabot ferré est alors soulevé de manière latérale, c'est-à-dire réorienté selon un angle de roulis par rapport à sa position normale.

L'homme du métier comprend en outre que la plaque orthopédique permet de rééquilibrer un posé dissymétrique du sabot ferré et de limiter les mouvements extra sagittaux, dits mouvements de collatéromotion, c'est-à-dire les mouvements selon le plan de symétrie du fer à cheval orthogonal au plan dans lequel le fer à cheval s'étend, par exemple les mouvements de rotation du sabot ferré selon un angle de roulis par rapport à la position normale du sabot. Une telle plaque orthopédique est par exemple employée en cas de tendinite des branches du suspenseur, la plaque étant disposée du côté de la lésion.

Dans encore un mode de réalisation, la plaque orthopédique présente une section centrale reliée à deux sections extrémales, chacune des sections extrémales étant destinée à être fixée sur des portions de quartier du fer à cheval de manière à disposer la section centrale selon un centre géométrique du fer à cheval.

En d'autres termes, la plaque orthopédique est fixée selon des portions intermédiaires du fer à cheval *via* ses sections extrémales, de sorte que sa section centrale se situe à l'intérieur du fer à cheval et forme une surface d'appui centrale à l'intérieur du sabot ferré. Cette conception permet en particulier d'augmenter la surface d'appui totale du sabot ferré sans le déséquilibrer. On conçoit également une variante dans laquelle la géométrie de la plaque orthopédique permet sa fixation selon les portions de mamelle du fer à cheval, la section centrale restant disposée selon un centre géométrique du fer à cheval.

L'homme du métier comprend que cette conception de la plaque orthopédique permet de diminuer les effets de levier dans les phases de flexion et d'extension interphalangiennes, de modifier les surfaces d'appui au sol ainsi que de soutenir et de protéger le centre du pied.

Un deuxième aspect de la présente invention concerne un kit orthopédique de ferrure équestre, le kit comprenant :
- un fer à cheval destiné à être fixé sur un sabot d'un cheval, le fer à cheval présentant une première face, dite face intérieure, configurée pour venir en contact avec le sabot et une deuxième face, dite face extérieure, opposée à la première face ; et
- au moins une plaque orthopédique selon le premier aspect de l'invention, la plaque orthopédique comprenant des moyens de fixation amovible de la plaque orthopédique sur la deuxième face.

De préférence, le fer à cheval présente au moins une mortaise configurée pour recevoir les moyens de fixation amovible de la plaque orthopédique.

On comprend ici que le fer à cheval et la plaque orthopédique sont conçus de manière complémentaire de manière à faciliter la fixation de la plaque orthopédique sur le fer à cheval. La face intérieure comprend usuellement au moins un pinçon venant renforcer la fixation du fer sur le sabot. Selon la conception, on prévoit une pluralité de plaques orthopédiques compatibles avec le fer à cheval et présentant des profils variés, le fer à cheval présentant par exemple une pluralité de mortaises disposées selon les portions d'éponge, de quartier et de mamelle et correspondant aux différents points de fixation possible des plaques sur le fer à cheval, par exemple de manière à permettre le traitement d'une variété de pathologies. On prévoit encore selon un exemple une gamme de plaques orthopédiques de profil similaire et d'épaisseur variable permettant une évolution progressive du profil de la ferrure orthopédique, sans modifier ou retirer le fer à cheval.

Ainsi, par les différentes caractéristiques techniques fonctionnelles et structurelles ci-dessus, le Demandeur propose une plaque et un kit orthopédique pour ferrure équestre permettant une modification simplifiée et temporaire de la forme de la ferrure, de manière à éviter toute déformation ou pathologie résultant d'un port prolongé de ferrure orthopédique sans nécessiter d'opération complexe.

### Brève description des figures

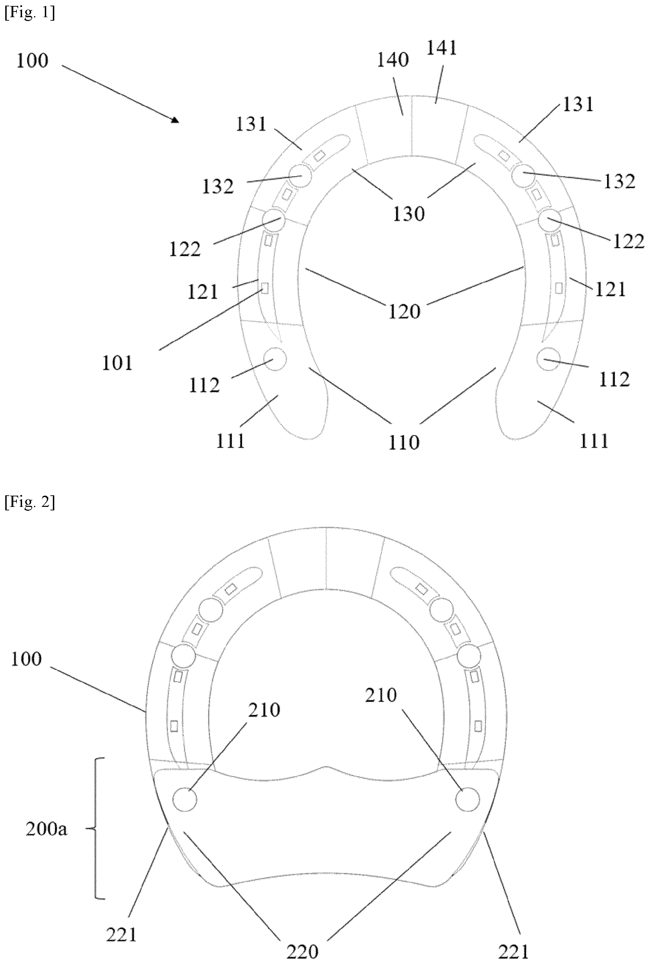

D'autres caractéristiques et avantages de la présente invention ressortiront de la description ci-dessous en référence aux figures 1 à 6 annexées illustrant une pluralité d'exemples de réalisation qui sont dépourvus de tout caractère limitatif et sur lesquelles :
[Fig. 1]
   La figure 1 représente une vue schématique d'un fer à cheval et de ses parties constitutives ;
[Fig. 2]
   La figure 2 représente une vue schématique d'une face extérieure d'un fer à cheval conforme à la figure 1, le fer à cheval recevant une plaque orthopédique selon un premier exemple de réalisation de la présente invention ;
[Fig. 3]

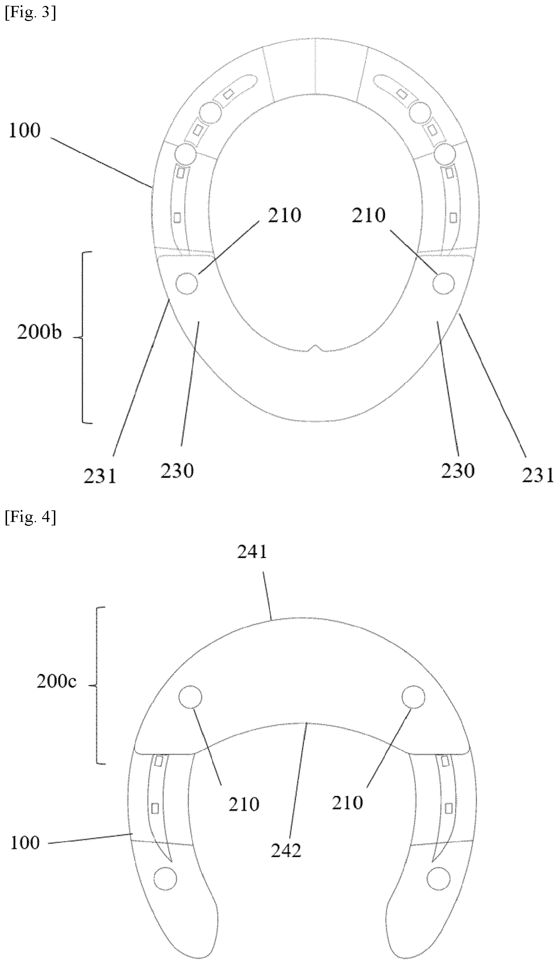

   La figure 3 représente une vue schématique d'une face extérieure d'un fer à cheval conforme à la figure 1, le fer à cheval recevant une plaque orthopédique selon un deuxième exemple de réalisation de la présente invention ;
[Fig. 4]
   La figure 4 représente une vue schématique d'une face extérieure d'un fer à cheval conforme à la figure 1, le fer à cheval recevant une plaque orthopédique selon un troisième exemple de réalisation de la présente invention ;
[Fig. 5]

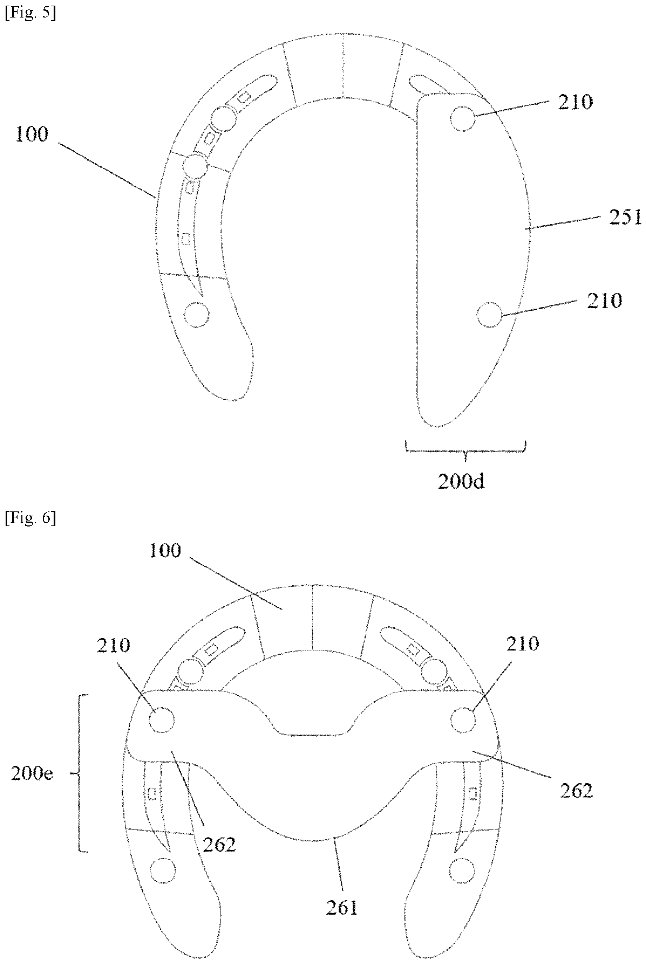

   La figure 5 représente une vue schématique d'une face extérieure d'un fer à cheval conforme à la figure 1, le fer à cheval recevant une plaque orthopédique selon un quatrième exemple de réalisation de la présente invention ;
[Fig. 6]
   La figure 6 représente une vue schématique d'une face extérieure d'un fer à cheval conforme à la figure 1, le fer à cheval recevant une plaque orthopédique selon un cinquième exemple de réalisation de la présente invention ; et

### Description détaillée

La présente invention va maintenant être décrite dans ce qui va suivre en référence conjointement aux figures 1 à 6 annexées à la description. Des mêmes éléments sont identifiés avec des mêmes signes de référence tout au long de la description qui va suivre.

Comme indiqué dans le préambule de la description, les solutions actuelles de ferrures orthopédiques sont complexes et coûteuses à réaliser. Sur le long terme, celles-ci sont également susceptible de créer des déséquilibres et d'entraver le processus de récupération ou de rééducation.

Un des objectifs de la présente invention consiste à permettre la réalisation d'une ferrure orthopédique plus simple de réalisation et évitant l'application de contraintes importantes prolongées.

Ceci est rendu possible dans les exemples décrits ci-après, lesquels considèrent un fer à cheval équipé d'une variété de plaques orthopédiques.

On comprendra ici que ces exemples ne sont pas limitatifs et que l'invention trouvera d'autres applications pour l'adaptation du profil des ferrures, par exemple pour la réalisation d'autres formes de ferrures orthopédiques ou encore pour réaliser des ferrures adaptées au travail sur une variété de sols.

Selon l'exemple des figures 2 à 6, une plaque orthopédique 200a, 200b, 200c, 200d, 200e développée dans le cadre de la présente invention est assemblée sur un fer à cheval 100, par exemple le fer à cheval 100 illustré en figure 1.

Un tel fer à cheval 100 correspond à une ferrure classique telle que couramment employée par un maréchal ferrant et présente une forme générale plane en U présentant deux faces, dont une première face, dite face intérieure, configurée pour venir en contact avec le sabot d'un cheval et une deuxième face, dite face extérieure, opposée à la première face.

Le fer à cheval 100 est également divisé en une pluralité de portions constitutives, ici listées des extrémités vers le centre du fer à cheval 100 :
- deux portions d'éponge 110 situées aux extrémités de la forme en U du fer à cheval 100 ;
- deux portions de quartier 120, chacune étant respectivement adjacente à une portion d'éponge 110 ;
- deux portions de mamelle 130, chacune étant respectivement adjacente à une portion de quartier 120 ; et
- une portion de pince 140 adjacente aux deux portions de mamelle 130.

Chacune des portions d'éponge 110, de quartier 120, de mamelle 130 et de pince 140 définit respectivement un contour extérieur 111, 121, 131, 141, l'ensemble de ces contours extérieurs 111, 121, 131, 141, aussi appelé rive externe du fer à cheval 100, correspondant sensiblement au contour d'un sabot d'un cheval.

Plusieurs ouvertures 101 sont ménagées sur le fer à cheval 100 et en traversent l'épaisseur entre les faces intérieure et extérieure, ces ouvertures 101 étant destinées à recevoir des clous pour la fixation du fer à cheval 100 sur le sabot. Ces ouvertures 101 sont usuellement appelées « contre-perçures » sur la face intérieure et « étampures » sur la face extérieure.

Le fer à cheval 100 présente optionnellement, sur sa face intérieure (non illustrée sur ces figures), un ou plusieurs pinçons, lesquels permettent de compléter et/ou de remplacer les clous pour la fixation du fer à cheval 100 sur le sabot.

En accord avec le concept sous-jacent de l'invention, une plaque orthopédique 200a, 200b, 200c, 200d, 200e est alors assemblée sur le fer à cheval 100, par exemple selon l'une des configurations illustrées par les figures 2 à 6. Une telle plaque orthopédique 200a, 200b, 200c, 200d, 200e correspond par exemple à une fine plaque réalisée dans un matériau métallique, par exemple en acier ou en aluminium. La ferrure classique est alors convertie en ferrure orthopédique par adaptation du profil et des propriétés mécaniques du fer à cheval, résultant en une modification de la pose du pied et des muscles et/ou tendons sollicités lors de l'effort. La réalisation de cette ferrure orthopédique par combinaison d'un fer à cheval classique et d'une plaque orthopédique 200a, 200b, 200c, 200d, 200e, par exemple sélectionnée parmi une variété de modèles ou encore à l'intérieur d'une gamme de plaques, présente une grande simplicité, réduisant les coûts de fabrication de la ferrure et de ferrage du cheval. On comprend ici que la forme, le matériau et l'épaisseur de la plaque orthopédique 200a, 200b, 200c, 200d, 200e sont sélectionnés selon une variété de critères, notamment selon la modification recherchée du profil de la ferrure orthopédique, la surface d'appui et le poids auquel la ferrure est soumise, la simplicité de fabrication, la résistance à l'usure et à la déformation, ou tout autre critère connu de l'homme du métier. On choisira par exemple une plaque orthopédique 200a, 200b, 200c, 200d, 200e en acier pour un cheval de gabarit et/ou des efforts attendus plus importants, résultant en des contraintes mécaniques accrues sur la ferrure orthopédique.

La plaque orthopédique 200a, 200b, 200c, 200d, 200e est avantageusement assemblée sur la face extérieure du fer à cheval 100 à l'aide de moyens de fixation amovible. Ainsi, lorsque le fer à cheval 100 est monté sur le sabot d'un cheval selon sa face intérieure, sa face extérieure reste accessible pour la pose ou le retrait de la plaque orthopédique 200a, 200b, 200c, 200d, 200e, permettant ainsi d'alterner régulièrement entre une ferrure classique et une ferrure orthopédique sans nécessiter de changer le fer à cheval 100 en lui-même. Cette alternance est par exemple effectuée pour séparer les périodes d'effort dans lesquelles les zones et/ou tendons fragilisés sont protégés et/ou soulagés, des périodes de rééducation dans lesquelles les zones et/ou tendons fragilisés sont exposés et/ou sollicités.

Selon l'exemple des figures 2 à 6, les moyens de fixation amovible 210 correspondent à des vis dimensionnées pour leur insertion dans des mortaises 112, 122, 132 pratiquées dans le fer à cheval 100. De telles mortaises 112, 122, 132 sont communément pratiquées dans les fers à cheval par les maréchaux ferrant, en particulier dans les portions d'éponge 110, pour la réception de crampons. La provision de mortaises 112, 122, 132 supplémentaires, en particulier dans les portions de quartier 120 et/ou de mamelle 130 correspond en outre à une opération simple à réaliser par un maréchal-ferrant, notamment par perçage et taraudage, de manière identique à la réalisation de mortaises dans les portions d'éponge 110.

Selon une conception, on prévoit une ou plusieurs plaques orthopédiques 200a, 200b, 200c, 200d, 200e telles que décrites ci-après et dimensionnées pour leur fixation sur un fer à cheval 100 standard, un tel fer à cheval 100 étant en premier lieu adapté pour la fixation amovible des plaques orthopédiques 200a, 200b, 200c, 200d, 200e sélectionnées par réalisation, si nécessaire, de mortaises 112, 122, 132 supplémentaires avant son clouage sur le sabot d'un cheval, une plaque orthopédique 200a, 200b, 200c, 200d, 200e étant par la suite fixée et retirée de manière périodique. Une telle conception permet ainsi d'employer un fer à cheval 100 classique et ne nécessite pour seule adaptation qu'une opération communément réalisée par un maréchal ferrant.

Selon une autre conception, on prévoit un kit composé d'un fer à cheval 100 et d'au moins une plaque orthopédique 200a, 200b, 200c, 200d, 200e, le fer à cheval 100 étant au préalable muni de mortaises 112, 122, 132 compatibles avec la fixation de la ou les plaques orthopédiques 200a, 200b, 200c, 200d, 200e. Une telle conception permet alors de fournir le fer à cheval 100 et la plaque orthopédique 200a, 200b, 200c, 200d, 200e à l'intérieur d'un ensemble d'une taille donnée, par exemple sélectionnée parmi une gamme variée de poids ou de taille selon les dimensions du sabot, et garantissant la compatibilité du fer à cheval 100 et de la plaque orthopédique 200a, 200b, 200c, 200d, 200e, sans nécessiter d'opération additionnelle.

La plaque orthopédique 200a, 200b, 200c, 200d, 200e est ainsi assemblée sur le fer à cheval 100 par mise en contact de la plaque orthopédique 200a, 200b, 200c, 200d, 200e sur la face extérieure du fer à cheval 100, insertion et vissage des vis formant les moyens de fixation amovible de la plaque 200a, 200b, 200c, 200d, 200e sur le fer à cheval 100. Une telle opération est de préférence réalisée après le ferrage du cheval, de manière à ce que la plaque orthopédique 200a, 200b, 200c, 200d, 200e n'obstrue pas les ouvertures 101. Le vissage peut être réalisé par n'importe quel utilisateur, par exemple un cavalier sans l'aide d'un maréchal ferrant, et peut être assisté par l'emploi d'une clé dédiée. Si nécessaire, les mortaises 112, 122, 132 sont nettoyées au préalable, par exemple à l'aide d'un outil pointu et/ou d'un taraud, pour permettre l'insertion des vis.

Optionnellement, les vis présentent une tête de vis configurée pour s'étendre de la plaque orthopédique 200a, 200b, 200c, 200d, 200e lorsque celle-ci est fixée sur le fer à cheval 100. Les têtes de vis créent ainsi un relief sur la plaque orthopédique 200a, 200b, 200c, 200d, 200e servant également de crampon, permettant de faciliter l'adhérence du sabot ferré sur un terrain souple, par exemple sur de l'herbe humide. Selon une variante de réalisation, on prévoit une pluralité de vis présentant des têtes de profils différents et plus ou moins prononcés, permettant de réaliser des crampons adaptés à des terrains spécifiques ou encore d'éviter la présence de crampons. Il apparaît en outre que la tête de vis facilite les opérations de vissage et de dévissage, la fixation de la plaque orthopédique 200 sur le fer à cheval 100 devenant aussi accessible pour l'utilisateur que la fixation de crampons sur un même fer à cheval. Ainsi, une fois la plaque orthopédique 200a, 200b, 200c, 200d, 200e fixée sur le fer à cheval 100, le profil et les propriétés mécaniques de la ferrure sont modifiées, en fonction de la forme et de la fixation de la plaque orthopédique 200a, 200b, 200c, 200d, 200e. On prévoit ainsi une pluralité de modes de réalisation et de fixation de la plaque orthopédique 200a, 200b, 200c, 200d, 200e, permettant de fournir une variété d'adaptations du fer à cheval 100. Bien évidemment, les formes décrites en regard de ces plaques orthopédiques 200a, 200b, 200c, 200d, 200e peuvent être adaptées de manière à les faire correspondre au profil et aux dimensions d'un fer à cheval 100 connu de l'homme du métier, sans en modifier la fonctionnalité. D'autres variantes peuvent également être envisagées pour la réalisation d'autres formes de ferrures orthopédiques connues de l'état de la technique.

Selon un premier exemple de réalisation illustré dans la figure 2, on prévoit une première plaque orthopédique 200a présentant une forme sensiblement trapézoïdale isocèle, c'est-à-dire une forme de quadrilatère dont deux côtés opposés sont parallèles et présentent la même médiatrice, laquelle forme un axe de symétrie du trapèze. La première plaque orthopédique 200a présente en outre deux extrémités longitudinales 220 dont la forme correspond aux portions d'éponge 110 du fer à cheval 100, le contour extérieur 221 des extrémités longitudinales 220 correspondant au contour extérieur 111 des portions d'éponge 110 définissant un contour 221, et les extrémités longitudinales 220 étant reliées l'une à l'autre par le corps de la première plaque orthopédique 220a selon une longueur correspondant à l'écartement entre les deux portions d'éponge 110. On comprend additionnellement que la première plaque orthopédique 200a peut avantageusement présenter une forme sensiblement arrondie par rapport à un trapèze isocèle, en accord avec la figure 2, en particulier de manière à mieux reproduire le contour extérieur 111 des portions d'éponge 110.

L'utilisateur vient alors fixer la première plaque orthopédique 200a sur le fer à cheval 100 à l'aide des moyens de fixation amovible 210, par exemple par insertion de vis à travers la première plaque orthopédique 200a et les mortaises 112 de la portion d'éponge 110, en associant les extrémités longitudinales 220 aux portions d'éponge 110 de sorte que la première plaque orthopédique 200a s'étende entre les deux portions d'éponge 110 et les relie entre elles.

Selon un deuxième exemple de réalisation illustré dans la figure 3, on prévoit une deuxième plaque orthopédique 200b présentant une forme en arc de cercle, c'est-à-dire une forme en portion de cercle ou d'ellipse limitée par deux points, dont les portions extrémales proches de ces deux points sont appelées ici extrémités angulaires 230. La forme des extrémités angulaires 230 correspond à celle des portions d'éponge 110, le contour 231 des extrémités angulaires 230 correspond au contour extérieur 111 des portions d'éponge 110, et les extrémités angulaires 230 sont espacées de manière à permettre la fixation de chaque extrémité angulaire 230 sur les portions d'éponge 110, par exemple par vissage dans les mortaises 112 des portions d'éponge 110. Une fois les extrémités angulaires 230 fixées sur les portions d'éponge 110, la deuxième plaque orthopédique 200b s'étend alors dans la prolongation des portions d'éponge 110, de sorte que l'ensemble formé par le fer à cheval 100 et la deuxième plaque orthopédique 200b présente une forme sensiblement circulaire ou elliptique telle que représentée par la figure 3.

Selon un troisième mode de réalisation illustré dans la figure 4, on prévoit une troisième plaque orthopédique 200c présentant une forme en arc de cercle plein, c'est-à-dire définie d'une part par un arc de cercle formant le contour externe 241 de la troisième plaque orthopédique 200c, d'autre part par une corde reliant les extrémités de l'arc de cercle et formant le contour interne 242 de la troisième plaque orthopédique 200c. Dans cet exemple, le contour interne 242 de la troisième plaque orthopédique 200c présente une forme légèrement courbée de manière concave par rapport à la corde de l'arc de cercle. On comprend bien évidemment que le contour interne 242 peut présenter une concavité plus ou moins prononcée ou encore une forme rectiligne selon la modification exacte recherchée pour la ferrure orthopédique. La forme du contour externe 241 de la troisième plaque orthopédique 200c correspond avantageusement au contour extérieur 131, 141 des portions de mamelle 130 et de pince 140 de manière à permettre la fixation de la troisième plaque orthopédique 200c sur ces portions de mamelle 130 et de pince 140. L'utilisateur fixe par exemple la troisième plaque orthopédique 200c sur le fer à l'aide de vis compatibles avec des mortaises 131 des portions de mamelle 130.

Selon un quatrième mode de réalisation illustré dans la figure 5, on prévoit une quatrième plaque orthopédique 200d définissant un contour 251 correspondant au contour extérieur 111, 121, 131 de portions adjacentes d'éponge 110, de quartier 120 et de mamelle 130, selon une moitié latérale du fer à cheval 100, c'est-à-dire un côté gauche ou droit du fer à cheval 100. Lorsque l'utilisateur fixe la quatrième plaque orthopédique 200d sur le fer à cheval 100, par exemple à l'aide de moyens de fixation 210 vissés dans des mortaises 112, 132 en portion d'éponge 110 et de mamelle 130, la quatrième plaque orthopédique 200d vient alors recouvrir les portions adjacentes d'éponge 110, de quartier 120 et de mamelle 130 selon cette moitié latérale et s'étend vers l'intérieur du fer à cheval 100. Une telle conception est ainsi sensiblement similaire à celle de la troisième plaque orthopédique 200c en arc de cercle plein, la quatrième plaque orthopédique 200d étant au contraire dédiée à une fixation selon une moitié latérale du fer à cheval 100 et présentant une forme adaptée au profil des portions adjacentes d'éponge 110, de quartier 120 et de mamelle 130.

Bien évidemment, on peut prévoir deux variantes de la quatrième plaque orthopédique 200d adaptées chacune à une moitié latérale du fer à cheval 100, c'est-à-dire symétriques l'une par rapport à l'autre et produisant des effets opposés.

Selon un cinquième mode de réalisation illustré dans la figure 6, on prévoit une cinquième plaque orthopédique 200e présentant une section centrale 261 reliée à deux sections extrémales 262, la section centrale 261 étant disposée par rapport aux sections extrémales 262 de manière à être disposée selon un centre géométrique du fer à cheval 100 lorsque les sections extrémales 262 sont fixées sur des portions de quartier 120 du fer à cheval 100, par exemple à l'aide de mortaises 122 en portion de quartier 120 recevant les moyens de fixation amovible 210. La section centrale 261 présente par exemple une forme plane élargie par rapport aux sections extrémales 262, de manière à définir une surface d'appui centrale supplémentaire par rapport au fer à cheval 100. On comprend également qu'il est possible d'envisager des variantes de la cinquième plaque orthopédique 200e présentant également une section centrale 261 et des sections extrémales 262, la section centrale étant destinée à être disposée selon le centre géométrique du fer à cheval 100 lorsque les sections extrémales sont fixées à d'autres endroits du fer à cheval 100, par exemple sur les portions d'éponge 110 ou de mamelle 130 du fer à cheval 100. De telles variantes permettent ainsi de limiter le nombre de positions sur lesquelles des mortaises 112, 122, 132 sont susceptibles d'être ménagées. Ainsi, on comprendra que la présente invention prévoit un dispositif de plaque orthopédique destiné à être monté sur un fer à cheval, ainsi qu'un kit comprenant un tel fer à cheval et au moins une plaque orthopédique, l'assemblage entre la plaque orthopédique et le fer à cheval permettant la réalisation d'une ferrure orthopédique. La plaque orthopédique étant montée de manière amovible sur la face extérieure du fer à cheval, la plaque peut être retirée de manière fréquente sans nécessiter de refaire la ferrure, même lorsque le fer à cheval est cloué sur un sabot, permettant d'adapter l'emploi ou non de ferrure orthopédique dans le temps, de manière périodique, ou encore en fonction des efforts. Le pied fragilisé et/ou déformé peut ainsi être protégé durant l'effort et rééduqué le reste du temps. La conception simple de la plaque orthopédique minimise également les besoins de recourir à un spécialiste, et rend l'emploi de ferrures orthopédiques plus accessible à l'utilisateur moyen.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Plaque orthopédique (200a, 200b, 200c, 200d, 200e) pour ferrure équestre, destinée à être assemblée avec un fer à cheval (100), ladite plaque (200a, 200b, 200c, 200d, 200e) présentant une épaisseur et une forme dimensionnées pour modifier le profil dudit fer à cheval (100) lorsque ladite plaque (200a, 200b, 200c, 200d, 200e) est assemblée avec ledit fer à cheval (100), **caractérisée en ce que** ladite plaque orthopédique (200a, 200b, 200c, 200d, 200e) comporte des moyens de fixation amovible (210) de ladite plaque orthopédique (200a, 200b, 200c, 200d, 200e) sur ledit fer à cheval (100), ladite plaque orthopédique (200a, 200b, 200c, 200d, 200e) restant amovible lorsque ledit fer à cheval (100) est assemblé sur un sabot d'un cheval.

2. Plaque orthopédique (200a, 200b, 200c, 200d, 200e) selon la revendication 1, dans laquelle lesdits moyens de fixation amovible (210) correspondent à des vis dimensionnées pour leur insertion dans des mortaises (112, 122, 132) pratiquées sur ledit fer à cheval (100).

3. Plaque orthopédique (200a, 200b, 200c, 200d, 200e) selon la revendication 2, dans laquelle au moins une desdites vis présente une tête de vis configurée pour s'étendre de ladite plaque (200a, 200b, 200c, 200d, 200e) lorsque ladite plaque (200a, 200b, 200c, 200d, 200e) est fixée sur ledit fer à cheval (100), ladite tête de vis s'étendant selon une direction orthogonale audit fer à cheval (100).

4. Plaque orthopédique (200a, 200b, 200c, 200d, 200e) selon l'une des revendications 1 à 3, laquelle présente une forme sensiblement trapézoïdale isocèle comprenant deux extrémités longitudinales (220), lesdites extrémités longitudinales (220) définissant un contour correspondant au contour de deux portions d'éponge (110) dudit fer à cheval (100), ladite plaque (200a, 200b, 200c, 200d, 200e) étant destinée à être fixée sur lesdites portions d'éponge (110) dudit fer à cheval (100) par lesdites extrémités longitudinales (220) de manière à s'étendre entre lesdites deux portions d'éponge (110).

5. Plaque orthopédique (200a, 200b, 200c, 200d, 200e) selon l'une des revendications 1 à 3, laquelle présente une forme en arc de cercle comprenant deux extrémités angulaires (230), lesdites extrémités angulaires (230) définissant un contour correspondant au contour de deux portions d'éponge (110) dudit fer à cheval (100), ladite plaque (200a, 200b, 200c, 200d, 200e) étant destinée à être fixée sur lesdites portions d'éponge (110) dudit fer à cheval (100) par lesdites extrémités angulaires (230), de manière à s'étendre de manière excentrée par rapport audit fer à cheval (100).

6. Plaque orthopédique (200a, 200b, 200c, 200d, 200e) selon l'une des revendications 1 à 3, laquelle présente une forme en arc de cercle plein définissant un contour externe (241) correspondant au contour d'une portion de pince (140) et de deux portions de mamelle (130) dudit fer à cheval (100), ladite plaque (200a, 200b, 200c, 200d, 200e) étant destinée à être fixée sur lesdites portions de mamelle (130) dudit fer à cheval (100) de manière à faire correspondre ledit contour externe (241) auxdites portions de pince (140) et de mamelle (130).

7. Plaque orthopédique (200a, 200b, 200c, 200d, 200e) selon l'une des revendications 1 à 3, laquelle présente une forme définissant un contour correspondant au contour de portions adjacentes d'éponge (110), de quartier (120) et de mamelle (130) dudit fer à cheval (100), selon une moitié latérale dudit fer à cheval (100), ladite plaque (200a, 200b, 200c, 200d, 200e) étant destinée à être fixée sur ladite portion d'éponge (110) et ladite portion de mamelle (130) dudit fer à cheval (110) en recouvrant lesdites portions adjacentes d'éponge (110), de quartier (120) et de mamelle (130) sur ladite moitié latérale et s'étendant vers un centre géométrique dudit fer à cheval (100).

8. Plaque orthopédique (200a, 200b, 200c, 200d, 200e) selon l'une des revendications 1 à 3, laquelle présente une section centrale (261) reliée à deux sections extrémales (262), chacune desdites sections extrémales (262) étant destinée à être fixée sur des portions de quartier (120) dudit fer à cheval (100) de manière à disposer ladite section centrale (261) selon un centre géométrique dudit fer à cheval (100).

9. Kit orthopédique de ferrure équestre, ledit kit comprenant :
- un fer à cheval (100) destiné à être fixé sur un sabot d'un cheval, ledit fer à cheval (100) présentant une première face, dite face intérieure, configurée pour venir en contact avec ledit sabot et une deuxième face, dite face extérieure, opposée à ladite première face ; et
- au moins une plaque orthopédique (200a, 200b, 200c, 200d, 200e) selon l'une quelconque des revendications 1 à 8, ladite plaque orthopédique (200a, 200b, 200c, 200d, 200e) comprenant des moyens de fixation amovible (210) de ladite plaque orthopédique (200a, 200b, 200c, 200d, 200e) sur ladite deuxième face.

10. Kit orthopédique selon la revendication 9, dans lequel ledit fer à cheval (100) présente au moins une mortaise (112, 122, 132) configurée pour recevoir lesdits moyens de fixation amovible (210) de ladite plaque orthopédique (200a, 200b, 200c, 200d, 200e).
